# EUROPEAN PATENT APPLICATION

(11) **EP 3 309 449 A1**
(43) Date of publication of application: **18.04.2018**
(21) Application number: 17187484.5
(22) Date of filing: 23.08.2017
(51) Int. Cl.: F21S 43/19, F21S 43/14, F21S 45/48

(54) **LIGHTING DEVICE FOR VEHICLE AND LIGHTING TOOL FOR VEHICLE**

(30) Priority: 13.10.2016 JP 2016201494
(71) Applicant: Toshiba Lighting & Technology Corporation, Yokosuka-shi, Kanagawa 237-8510 (JP)
(72) Inventor: Shiraishi, Hiromitsu, Yokosuka-shi, Kanagawa 237-8510 (JP)
(74) Representative: Awapatent AB

(57) **Abstract**

According to one embodiment, a lighting device for vehicle includes a socket containing a high heat conductive resin; a light emitting unit which is provided at one end portion of the socket, and includes a substrate which contains ceramic, and a light emitting element provided on the substrate. A face of the substrate on a side opposite to a side on which the light emitting element is provided is in contact with one end portion of the socket. Power applied to the light emitting element is 1 W or more and 3 W or less. The high heat conductive resin contains polyamide, and filler containing carbon, and has heat conductivity of 15 W/(m·K) or more, and 33 W/(m·K) or less.

## Description

### FIELD

Embodiments described herein relate generally to a lighting device for vehicle, and a lighting tool for vehicle.

### BACKGROUND

There is a lighting device for vehicle which includes a socket, and a light emitting unit which is provided at one end portion of the socket, and includes a light emitting diode (LED).

Heat generated in the light emitting diode is mainly radiated to the outside through the socket. For this reason, the socket is formed of metal such as an aluminum alloy.

Here, it is desirable that the lighting device for vehicle is light weight. For this reason, in recent years, a socket formed of a high heat conductive resin is proposed. When the socket formed of the high heat conductive resin is used, it is possible to obtain an improved heat radiating property, and light weight. In this case, when increasing an amount of filler contained in the high heat conductive resin, it is possible to improve the heat radiating property.

Meanwhile, when the amount of filler contained in the high heat conductive resin is excessively large, mechanical intensity of the socket decreases. In addition, vibration or shock is added to the lighting device for vehicle. For this reason, when a high heat conductive resin containing a large amount of filler is used, damage such as fracture or a chip easily occurs in the socket.

In addition, the lighting device for vehicle which is provided in a vehicle is also used under environment of a high temperature and high humidity. For this reason, when adopting a socket formed of the high heat conductive resin, there is a concern that the socket may be subjected to hydrolysis under the environment of a high temperature and high humidity.

Therefore, a development of a technology in which it is possible to improve a heat radiating property, mechanical intensity, a resistance to environment, and a shock resistance is desired.

### BRIEF DESCRIPTION OF THE DRAWINGS

FIG. 1 is a schematic perspective view which exemplifies a lighting device for vehicle according to an embodiment.
FIG. 2 is a schematic sectional view of the lighting device for vehicle which is taken along line A-A in FIG. 1.
FIG. 3 is a table which exemplifies a result of a performance test of a socket.
FIG. 4 is a table which exemplifies a result of a performance test of the socket.
FIG. 5 is a table which exemplifies a result of a performance test of the socket.
FIG. 6 is a schematic partial sectional view which exemplifies a lighting tool for vehicle.

### DETAILED DESCRIPTION

A lighting device for vehicle according to one embodiment includes a socket containing a high heat conductive resin; and a light emitting unit which is provided at one end portion of the socket, and includes a substrate which contains ceramic, and a light emitting element provided on the substrate, in which a face of the substrate on a side opposite to a side on which the light emitting element is provided is in contact with one end portion of the socket, power applied to the light emitting element is 1 W or more and 3 W or less, and the high heat conductive resin contains polyamide, and filler containing carbon, and has heat conductivity of 15 W/(m·K) or more, and 33 W/(m·K) or less.

Hereinafter, the embodiment will be exemplified with reference to drawings. In addition, in each figure, the same reference numerals are attached to the same constituent elements, and detailed descriptions thereof will be appropriately omitted.

### Lighting device for vehicle

A lighting device for vehicle 1 according to the embodiment can be provided in a vehicle, a railway vehicle, or the like, for example. As the lighting device for vehicle 1 provided in a vehicle, for example, it is possible to exemplify a device which is used in a front combination light (for example, light in which daytime running lamp (DRL), position lamp, turn signal lamp, and the like, are appropriately combined), a rear combination light (for example, stop lamp, tail lamp, turn signal lamp, back lamp, fog lamp, and the like, are appropriately combined), or the like. However, a use of the lighting device for vehicle 1 is not limited to these.

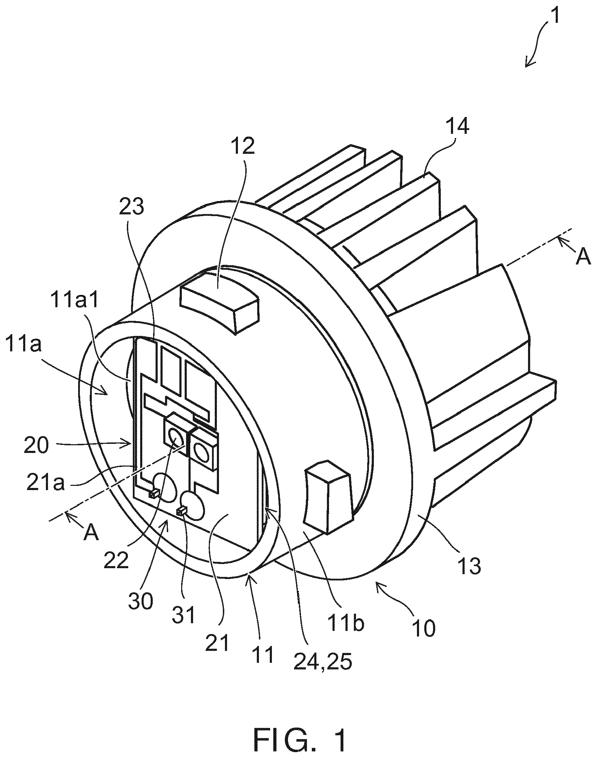

FIG. 1 is a schematic perspective view for exemplifying the lighting device for vehicle 1 according to the embodiment.

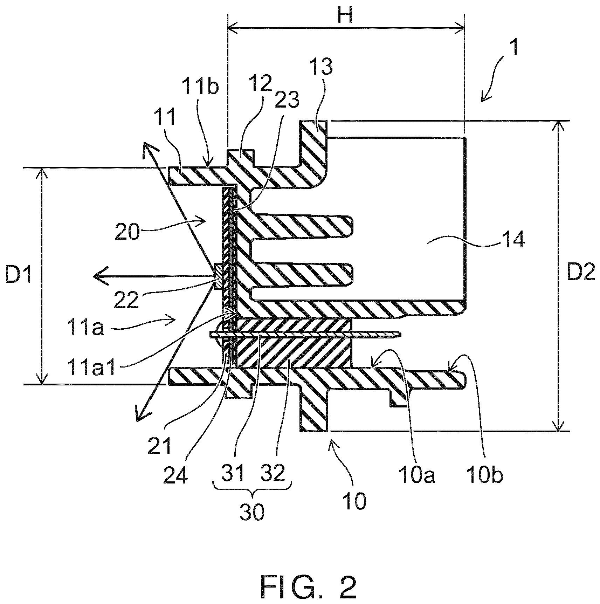

FIG. 2 is a schematic sectional view of the lighting device for vehicle 1 which is taken along line A-A in FIG. 1.

As illustrated in FIGS. 1 and 2, a socket 10, a light emitting unit 20, and a power feeding unit 30 are provided in the lighting device for vehicle 1.

The socket 10 includes a mounting unit 11, a bayonet 12, a flange 13, and a heat radiating fin 14.

The mounting unit 11 is provided on a face of the flange 13 on a side opposite to a side on which the heat radiating fin 14 is provided. An external shape of the mounting unit 11 can be set to a columnar shape. The external shape of the mounting unit 11 is, for example, a cylindrical shape. The mounting unit 11 includes a recessed portion 11a which is open to an end face on a side opposite to the flange 13 side. A substrate 21 is provided on a base 11a1 of the recessed portion 11a through a heat radiating plate 24 and a heat radiating layer 25.

The bayonet 12 is provided on an outer face 11b of the mounting unit 11. The bayonet 12 protrudes toward the outside of the lighting device for vehicle 1. The bayonet 12 faces the flange 13. A plurality of the bayonets 12 are provided. The bayonet 12 is used when attaching the lighting device for vehicle 1 to a housing 101 of a lighting tool for vehicle 100. The bayonet 12 is used for twist-lock.

The flange 13 is formed in a plate shape. The flange 13 can be formed in disk shape, for example. An outer face of the flange 13 is located in the outside of the lighting device for vehicle 1 compared to an outer face of the bayonet 12.

The heat radiating fin 14 is provided on a face of the flange 13 on a side opposite to the side on which the mounting unit 11 is provided. A plurality of the heat radiating fins 14 can be provided. The plurality of heat radiating fins 14 can be provided so as to be parallel to each other. The heat radiating fins 14 can be set to a flat plate shape.

A hole 10a, and a hole 10b connected to the hole 10a are provided in the socket 10. An insulating portion 32 is provided inside the hole 10a. A connector 105 including a sealing member 105a is inserted into the hole 10b. For this reason, a sectional shape of the hole 10b is set to a shape which is appropriate for a sectional shape of the connector 105 including the sealing member 105a.

Heat generated in the light emitting unit 20 is mainly transmitted to the heat radiating fin 14 through the mounting unit 11 and the flange 13. The heat transmitted to the heat radiating fin 14 is mainly radiated to the outside from the heat radiating fin 14.

For this reason, the socket 10 is formed of a material with high heat conductivity by taking transmitting of heat generated in the light emitting unit 20 to the outside into consideration. It is preferable to form the socket 10 using a material with a low specific gravity in order to make the lighting device for vehicle 1 light weight. For this reason, the socket 10 is formed of a high heat conductive resin. The high heat conductive resin is a resin into which filler formed of a material with high heat conductivity is mixed.

Here, when increasing an amount of filler contained in the high heat conductive resin, it is possible to improve a heat radiating property.

Meanwhile, when excessively increasing the amount of filler contained in the high heat conductive resin, mechanical intensity of the socket 10 decreases. In addition, vibration accompanied by traveling, or a shock, or the like, accompanied by opening or closing of a bonnet is added to the lighting device for vehicle 1. For this reason, when the high heat conductive resin containing a large amount of filler is used, damage such as fracture or a chip easily occurs in the socket 10.

In a case of the lighting device for vehicle 1 provided in a vehicle, a temperature of use environment is changed in a range of -40°C to 85°C. In addition, the lighting device for vehicle 1 provided in a vehicle is also used under the environment of a high temperature and high humidity. For this reason, when adopting the socket 10 formed of the high heat conductive resin, there is a concern that the socket 10 may be subjected to hydrolysis under the environment of a high temperature and high humidity.

According to a knowledge which is obtained by the inventors of the invention, it is preferable to use a high heat conductive resin into which filler containing polyamide (PA) is mixed. By doing so, it is possible to suppress an occurrence of damage such as fracture or a chip in the socket 10, even when heat conductivity of the socket 10 (heat conductivity of high heat conductive resin) is set to approximately 53 W/(m·K) (containing amount of filler which contains carbon is 65 wt% or more and 90 wt% or less). In addition, it is possible to suppress an occurrence of hydrolysis in the socket 10 in the environment of a temperature of 85°C, and a humidity of 85%, for example.

A detail of a performance test of the socket 10 will be described later.

The light emitting unit 20 includes a substrate 21, a light emitting element 22, a resistor 23, the heat radiating plate 24, and the heat radiating layer 25.

The substrate 21 is provided on a base 11a1 of the recessed portion 11a through the heat radiating plate 24 and the heat radiating layer 25. The substrate 21 is formed in a flat-plate shape. A planar shape of the substrate 21 can be set to a quadrangle, for example.

A material or a structure of the substrate 21 is not particularly limited. For example, the substrate 21 can be formed of an inorganic material such as ceramic (for example, aluminum oxide, aluminum nitride, or the like), an organic material such as paper phenol, glass epoxy, or the like. In addition, the substrate 21 may be a substrate obtained by covering the surface of a metal plate with an insulating material. When covering the surface of metal with the insulating material, the insulating material may be formed of an organic material or an inorganic material.

However, in order to improve a heat radiating property, it is preferable to form the substrate 21 using a material with high heat conductivity. As the material with high heat conductivity, for example, it is possible to exemplify ceramic such as aluminum oxide or aluminum nitride, a high heat conductive resin, a material obtained by covering the surface of a metal plate with an insulating material, or the like.

In addition, the substrate 21 may be formed in a single layer, or a multiple layer.

A wiring pattern 21a is provided on the surface of the substrate 21. The wiring pattern 21a can be formed of a material of which a main component is silver. The wiring pattern 21a can be formed of silver, or a silver alloy, for example. However, a material of the wiring pattern 21a is not limited to the material of which the main component is silver. It is also possible to form the wiring pattern 21a using a material of which a main component is copper, for example.

The light emitting element 22 is provided on a side opposite to the base 11a1 side (socket 10 side) of the recessed portion 11a of the substrate 21. The light emitting element 22 is provided on the substrate 21. The light emitting element 22 is electrically connected to the wiring pattern 21a provided on the surface of the substrate 21. The light emitting element 22 can be set to a light emitting diode, an organic light emitting diode, a laser diode, or the like, for example. A plurality of the light emitting element 22 can be provided. The plurality of light emitting elements 22 can be connected to each other in series. In addition, the light emitting element 22 is connected to the resistor 23 in series.

A type of the light emitting element 22 is not particularly limited. The light emitting element 22 can be set to a surface mounting-type light emitting element such as a plastic leaded chip carrier (PLCC) type. The light emitting element 22 can also be set to a light emitting element including a lead wire of a cannonball type, or the like.

In addition, it is also possible to set to a light emitting element 22 which is mounted, using a chip on board (COB). When setting to the light emitting element 22 which is mounted, using the COB, it is possible to provide a chip-shaped light emitting element, wiring which electrically connects the light emitting element and the wiring pattern 21a, a frame-shaped member which surrounds the light emitting element 22 and the wiring, a sealing portion which is provided inside the frame-shaped member, and the like, on the substrate 21.

In this case, a phosphor can be contained in the sealing portion. The phosphor can be set to a yttrium-aluminum-garnet-based phosphor (YAG), for example. However, a type of the phosphor can be appropriately changed so as to obtain a desired luminescent color according to a use, or the like, of the lighting device for vehicle 1.

In addition, the light emitting element 22 exemplified in FIGS. 1 and 2 is a surface mounting-type light emitting element.

A top face of the light emitting element 22 as a light emitting face faces the front face side of the lighting device for vehicle 1, and the light emitting element 22 mainly outputs light toward the front face side of the lighting device for vehicle 1. The number of light emitting elements 22, and a size, an arrangement, and the like, thereof are not limited to examples, and can be appropriately changed according to a size, a use, or the like, of the lighting device for vehicle 1.

The resistor 23 is provided on a side opposite to the base 11a1 side of the recessed portion 11a of the substrate 21. The resistor 23 is provided on the substrate 21. The resistor 23 is electrically connected to the wiring pattern 21a provided on the surface of the substrate 21.

The resistor 23 can be set to a surface mounting-type resistor, a resistor with a lead wire (metal oxide film resistor), a film-shaped resistor which is formed, using a screen printing method, or the like.

The resistor 23 exemplified in FIG. 1 is a film-shaped resistor.

A material of the film-shape resistor can be set to ruthenium oxide (RuO₂) for example. It is possible to form the film-shaped resistor using a screen printing method and a baking method, for example. When the resistor 23 is set to the film-shaped resistor, a heat radiating property can be improved, since it is possible to make a contact area between the resistor 23 and the substrate 21 large. In addition, it is possible to form a plurality of resistors 23 at one time. For this reason, it is possible to improve productivity, and suppress unevenness in resistance value in the plurality of resistors 23.

Here, since there is unevenness in forward voltage characteristics of the light emitting element 22, when setting an application voltage between an anode terminal and a ground terminal to be constant, there is unevenness in brightness of light (light flux, luminance, intensity of light, and illuminance) which is radiated from the light emitting element 22. For this reason, it is set so that a value of current which flows in the light emitting element 22 falls in a predetermined range using the resistor 23, so that a brightness of light radiated from the light emitting element 22 falls in a predetermined range. In this case, it is set so that a value of current which flows in the light emitting element 22 falls in a predetermined range, by changing a resistance value of the resistor 23.

When the resistor 23 is the surface mounting-type resistor or the resistor with a lead wire, a resistor 23 with an appropriate resistance value is selected according to the forward voltage characteristics of the light emitting element 22.

When the resistor 23 is the film-shaped resistor, it is possible to increase a resistance value by removing a part of the resistor 23. For example, it is possible to easily remove a part of the resistor 23 by radiating laser light to the resistor 23. The number, a size, an arrangement, and the like, of the resistor 23 are not limited to examples, and can be appropriately changed according to the number, a specification, or the like, of light emitting elements 22.

In addition to that, it is possible to electrically connect a diode, a pull-down resistor, or the like, to the wiring pattern 21a which is provided on the surface of the substrate 21.

The diode is provided so as to cause a backward voltage not to be applied to the light emitting element 22, and cause a pulse noise from a reverse direction not to be applied to the light emitting element 22.

The pull-down resistor is provided in order to detect disconnection of the light emitting element 22, or prevent erroneous lighting, or the like.

In addition, it is also possible to provide a covering portion which covers the wiring pattern 21a, the film-shaped resistor, or the like. The covering portion can be set to a portion which includes a glass material, for example.

The heat radiating plate 24 is provided between the substrate 21 and the base 11a1 of the recessed portion 11a. The heat radiating plate 24 is formed in a plate shape, and is formed of a material with high heat conductivity. It is possible to set a planar shape and a planar dimension of the heat radiating plate 24 to be the same as those in the substrate 21. A thickness of the heat radiating plate 24 is not particularly limited; however, the thickness of the heat radiating plate 24 can be set to 1 mm or more and 5 mm or less. A material of the heat radiating plate 24 can be set to metal such as aluminum or an alloy of aluminum, for example.

The heat radiating layer 25 can be provided between the heat radiating plate 24 and the base 11a1 of the recessed portion 11a. It is difficult to cause the heat radiating plate 24 and the base 11a1 of the recessed portion 11a to be in close contact completely, when viewing in micron order. For this reason, a partial gap (air layer) is formed between the heat radiating plate 24 and the base 11a1 of the recessed portion 11a. Since air has a high heat insulation property, heat conductivity decreases when there is a partial gap. It is possible to set the heat radiating layer 25 to a layer formed of heat conductive grease (heat radiating grease), for example. When setting to the heat conductive grease, it is possible to fill the gap, and it is possible to improve heat conductivity. The heat conductive grease can be set to grease obtained by mixing filler formed of a material with high heat conductivity into modified silicone. The filler can be set to filler obtained by ceramic such as aluminum oxide, or aluminum nitride, for example. It is possible to set heat conductivity of the heat conductive grease to 1 W/(m·K) or more and 5 W/(m·K) or less, for example. Consistency of the heat conductive resin in a room temperature (25°C) can be set to 200 or more, and 400 or less, for example. A measuring method of the consistency is in conformity to JIS K 2220.

The thickness of the heat radiating layer 25 can be set to 0.005 mm or more, and 0.05 mm or less, for example. It is also possible to provide the heat radiating layer 25 between the heat radiating plate 24 and the substrate 21.

In addition, it is also possible to omit the heat radiating plate 24 and the heat radiating layer 25. When omitting the heat radiating plate 24 and the heat radiating layer 25, a face of the substrate 21 on a side opposite to the side on which the light emitting element 22 is provided comes into contact with the base 11a1 of the recessed portion 11a. When omitting the heat radiating plate 24 and the heat radiating layer 25, it is possible to reduce a manufacturing cost.

Meanwhile, when providing the heat radiating plate 24 and the heat radiating layer 25, it is possible to improve heat conductivity. For this reason, it is possible to efficiently transmit heat generated in the light emitting unit 20 to the socket 10. As described above, the larger the amount of filler contained in the high heat conductive resin, the heat radiating property of the socket 10 is improved; however, the mechanical intensity of the socket 10 decreases. In this case, when the heat radiating plate 24 and the heat radiating layer 25 are provided, it is possible to suppress a decrease in heat radiating property of the socket 10, even when the amount of filler contained in the high heat conductive resin is reduced.

Effects of the heat radiating plate 24 and the heat radiating layer 25 will be described later in detail.

The power feeding unit 30 includes a power feeding terminal 31 and the insulating portion 32.

The power feeding terminal 31 can be set to a rod-like body. A plurality of the power feeding terminals 31 are provided. The plurality of power feeding terminals 31 can be provided in a line in a predetermined direction. The plurality of power feeding terminals 31 are provided inside the insulating portion 32. The plurality of power feeding terminals 31 extend inside the insulating portion 32, and protrude from an end face of the insulating portion 32 on the light emitting unit 20 side, and an end face of the insulating portion 32 on the heat radiating fin 14 side.

As illustrated in FIG. 2, end portions of the plurality of power feeding terminals 31 on the light emitting unit 20 side are electrically or mechanically connected to the wiring pattern 21a provided on the substrate 21. That is, one end portion of the power feeding terminal 31 is soldered with the wiring pattern 21a. End portions of the plurality of power feeding terminals 31 on the heat radiating fin 14 side are exposed into the hole 10b. The connector 105 is fitted to the plurality of power feeding terminals 31 which are exposed into the hole 10b.

The power feeding terminal 31 has conductivity. The power feeding terminal 31 can be formed of metal such as a copper alloy, or the like, for example. In addition, the number, a shape, a material, and the like, of the power feeding terminal 31 are not limited to the examples, and can be appropriately changed.

As described above, the socket 10 is formed of a high heat conductive resin. The high heat conductive resin contains filler which contains carbon. For this reason, the socket 10 has heat conductivity. The insulating portion 32 is provided in order to insulate between the power feeding terminal 31 and the socket 10 having heat conductivity. In addition, the insulating portion 32 also has a function of holding the plurality of power feeding terminals 31.

The insulating portion 32 has an insulating property. The insulating portion 32 can be formed of an insulting resin. The insulating portion 32 can be formed of polyethylene terephthalate (PET), nylon, or the like, for example. The insulating portion 32 can be press-fitted into the hole 10a which is provided in the socket 10, for example.

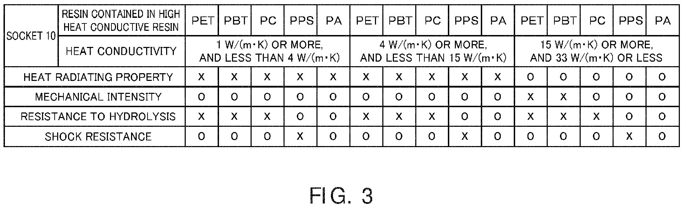

FIG. 3 is a table which exemplifies a result of a performance test of the socket 10.

FIG. 3 illustrates a case in which power supplied to the light emitting element 22 is 1 W or more, and 3 W or less. For example, it is a case in which a lighting device for vehicle 1 such as a winker with relatively low power is assumed.

In addition, there is a case in which the substrate 21 and the base 11a1 of the recessed portion 11a are caused to come into direct contact with each other, without providing the heat radiating plate 24 and the heat radiating layer 25.

A dimension of the socket 10 is set to the following dimension (refer to FIG. 2).

An outer diameter dimension (diameter dimension) D1 of the mounting unit 11 is set to 18 mm or more, and 30 mm or less.

An outer diameter dimension (diameter dimension) D2 of the flange 13 is set to 28 mm or more, and 40 mm or less.

The thickness of the heat radiating fin 14 is set to 1 mm or more, and 5 mm or less.

The number of heat radiating fins 14 is set to 2 to 7.

A distance H between an end face of the bayonet 12 on the light emitting unit 20 side and a tip end of the heat radiating fin 14 is set to 20 mm or more, and 30 mm or less.

A resin which is contained in the high heat conductive resin is set to PET, polybutylene terephthalate (PBT), poly carbonate (PC), polyphenylene sulfide (PPS), and PA.

The filler contained in the high heat conductive resin is set to fiber containing carbon. In addition, the heat conductivity of the high heat conductive resin is adjusted using a containing amount of filler. For example, when the heat conductivity is 1 W/(m·K), a containing amount of filler which contains carbon is set to 5 wt% or more, and 30 wt% or less. When the heat conductivity is 4 W/(m·K), a containing amount of filler which contains carbon is set to 10 wt% or more, and 40 wt% or less. When the heat conductivity is 15 W/(m·K), a containing amount of filler which contains carbon is set to 30 wt% or more, and 65 wt% or less. When the heat conductivity is 30 W/(m·K), a containing amount of filler which contains carbon is set to 35 wt% or more, and 75 wt% or less. When the heat conductivity is 33 W/(m·K), a containing amount of filler which contains carbon is set to 40 wt% or more, and 80 wt% or less. When the heat conductivity is 53 W/(m·K), a containing amount of filler which contains carbon is set to 65 wt% or more, and 90 wt% or less.

The heat conductivity of the high heat conductive resin can be obtained by a laser flash method, a steady-flow method, flat plate heat flow meter method, or the like. The heat conductivity of the high heat conductive resin is set to heat conductivity in a direction in which a resin flows at a time of molding. That is, the heat conductivity of the high heat conductive resin is set to heat conductivity in a direction from the base 11a1 of the recessed portion 11a to a tip end side of the heat radiating fin 14.

A heat radiating property is evaluated by a temperature of the substrate 21. When a temperature of the substrate 21 is 150°C or less, it is possible to suppress an adverse effect on a lifespan, or the like, of the light emitting element 22. For this reason, when evaluating the heat radiating property, a case in which a temperature of the substrate 21 is 150°C or less is set to "o", and a case in which a temperature of the substrate 21 exceeds 150°C is set to "x".

A material of the substrate 21 is set to ceramic (aluminum oxide), and the thickness of the substrate 21 is set to 0.3 mm or more, and 1.5 mm or less.

When evaluating the mechanical intensity, a shock when opening or closing a bonnet, and a stress applied when mounting the lighting device for vehicle 1 on a housing 101 of a lighting tool for vehicle 100 are taken into consideration. In the evaluation of the mechanical intensity, a force of 150 N is added to the bayonet 12 and the heat radiating fin 14, and a case in which fracture, a chip, or a crack does not occur is set to "o", and a case in which fracture, a chip, or a crack occurs is set to "x".

When evaluating resistance to hydrolysis, a case in which the socket 10 is left unattended for 1,000 hours under the environment of a temperature of 85°C, and a humidity of 85%, a force of 150 N is added to the bayonet 12 and the heat radiating fin 14, thereafter, and a case in which fracture, a chip, or a crack does not occur is set to "o", and a case in which fracture, chip, or crack occurs is set to "x".

A shock when opening or closing the bonnet is taken into consideration when evaluating shock resistance. When evaluating the shock resistance, a shock is added to the bayonet 12 and the heat radiating fin 14 using a pendulum, and a case in which fracture, a chip, or a crack does not occur is set to "o", and a case in which fracture, a chip, or a crack occurs is set to "x". In addition, the shock test is in conformity to JIS K 7111. As conditions of the shock test, a drop height of a cam is set to 1.778+0.254/-0 mm, and the number of rotations is set to 200+20/-0 rpm.

As we understood from FIG. 3, when setting a resin contained in the high heat conductive resin to PA or PPS, it is possible to improve resistance to hydrolysis. In addition, when setting a resin contained in the high heat conductive resin to PA, it is possible to improve shock resistance even when heat conductivity (heat conductivity of high heat conductive resin) of the socket 10 is set to 15 W/(m·K) or more, and 33 W/(m·K) or less. That is, it is possible to suppress an occurrence of damage such as fracture, a chip, a crack, or the like, even when increasing a containing amount of filler which contains carbon.

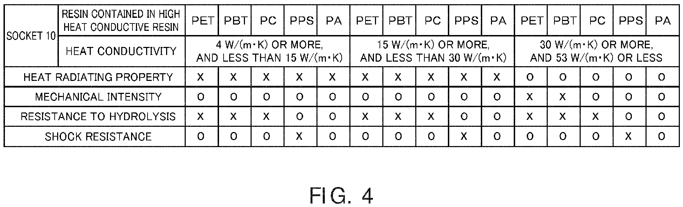

FIG. 4 is a table which exemplifies a result of a performance test of the socket 10.

FIG. 4 is a case in which power applied to the light emitting element 22 is 4 W or more, and 8 W or less. For example, it is a case in which a lighting device for vehicle 1 with relatively high power, such as a daytime running lamp is assumed.

In addition, it is a case in which the heat radiating plate 24 and the heat radiating layer 25 are not provided, and the substrate 21 and the base 11a1 of the recessed portion 11a are caused to come into direct contact with each other.

A dimension of the socket 10, a type of resin contained in the high heat conductive resin, and evaluation items are the same as those in the performance test exemplified in FIG. 3.

As we understood from FIG. 4, when setting the resin contained in the high heat conductive resin to PA or PPS, it is possible to improve resistance to hydrolysis. In addition, when setting the resin contained in the high heat conductive resin to PA, it is possible to improve shock resistance, even when the heat conductivity (heat conductivity of high heat conductive resin) of the socket 10 is set to 30 W/(m·K) or more, and 53 W/(m·K) or less. That is, it is possible to suppress an occurrence of damage such as fracture, a chip, a crack, or the like, even when increasing an amount of filler which contains carbon.

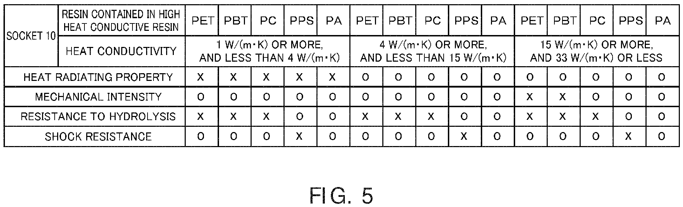

FIG. 5 is a table which exemplifies a result of a performance test of the socket 10.

FIG. 5 is a case in which power applied to the light emitting element 22 is 1 W or more, and 3 W or less. For example, it is a case in which a lighting device for vehicle 1 with relatively low power such as a winker is assumed.

In addition, it is a case in which the heat radiating plate 24 and the heat radiating layer 25 are provided.

The heat radiating plate 24 is set to an aluminum flat plate of which the thickness is 1 mm or more, and 5 mm or less.

The heat radiating layer 25 is set to heat a layer formed of conductive grease of which heat conductivity is 3 W/(m·K). The thickness of the heat radiating layer 25 is set to 0.005 mm or more, and 0.05 mm or less. The heat radiating layer 25 is provided between the heat radiating plate 24 and the base 11a1 of the recessed portion 11a.

A dimension of the socket 10, a type of resin contained in the high heat conductive resin, and evaluation items are the same as those in the performance test exemplified in FIG. 3.

As we understood from FIG. 5, when setting a resin contained in the high heat conductive resin to PA or PPS, it is possible to improve resistance to hydrolysis.

In addition, when setting the resin contained in the high heat conductive resin to PA, it is possible to improve a heat radiating property, even when the heat conductivity (heat conductivity of high heat conductive resin) of the socket 10 is set to 4 W/(m·K) or more, and 33 W/(m·K) or less. That is, when the heat radiating plate 24 and the heat radiating layer 25 are provided, and the resin contained in the high heat conductive resin is set to PA, it is possible to set a temperature of the substrate 21 to 150°C or less, even when a containing amount of filler which contains carbon is reduced.

### Lighting tool for vehicle

Subsequently, the lighting tool for vehicle 100 will be exemplified.

Hereinafter, a case in which the lighting tool for vehicle 100 is a front combination light provided in a vehicle will be described, as an example. However, the lighting tool for vehicle 100 is not limited to the front combination light provided in a vehicle. The lighting tool for vehicle 100 may be a lighting tool for vehicle which is provided in a vehicle, a railway vehicle, or the like.

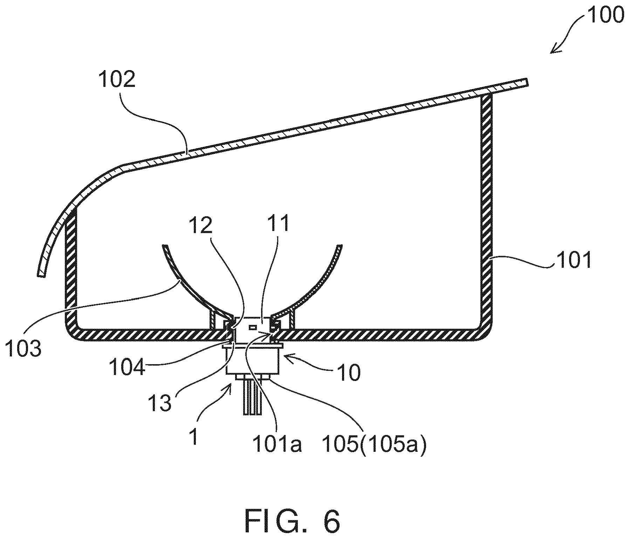

FIG. 6 is a schematic and partial sectional view for exemplifying the lighting tool for vehicle 100.

As illustrated in FIG. 6, the lighting device for vehicle 1, a housing 101, a cover 102, an optical element portion 103, a sealing member 104, and the connector 105 are provided in the lighting tool for vehicle 100.

The housing 101 holds the mounting unit 11. The housing 101 is formed in a box shape of which one end portion side is open. The housing 101 can be formed of a resin through which light is not transmitted, or the like, for example. An attaching hole 101a into which a portion in which the bayonet 12 of the mounting unit 11 is provided is inserted is provided on a base of the housing 101. A recessed portion into which the bayonet 12 provided in the mounting unit 11 is provided at the peripheral edge of the attaching hole 101a. A case in which the attaching hole 101a is directly provided in the housing 101 was exemplified; however, an attaching member including the attaching hole 101a may be provided in the housing 101.

When attaching the lighting device for vehicle 1 to the lighting tool for vehicle 100, the portion in which the bayonet 12 of the mounting unit 11 is provided is inserted into the attaching hole 101a, and the lighting device for vehicle 1 is rotated. Then, the bayonet 12 is held in a joint portion provided at the peripheral edge of the attaching hole 101a. Such an attaching method is referred to as twist-lock.

The cover 102 is provided so as to block the opening of the housing 101. The cover 102 can be formed of a light-transmitting resin, or the like. It is also possible to set the cover 102 to a cover with a function of lens, or the like.

Light output from the lighting device for vehicle 1 is input to the optical element portion 103. The optical element portion 103 performs reflection, diffusion, light guiding, condensing, a formation of a predetermined light distributing pattern, or the like, of light output from the lighting device for vehicle 1. For example, the optical element portion 103 exemplified in FIG. 6 is a reflector. In this case, the optical element portion 103 reflects light output from the lighting device for vehicle 1, and forms a predetermined light distributing pattern.

The sealing member 104 is provided between the flange 13 and the housing 101. The sealing member 104 can be set to a member formed in an annular shape. The sealing member 104 can be formed of a material with elasticity such as rubber, a silicone resin, or the like.

When attaching the lighting device for vehicle 1 to the lighting tool for vehicle 100, the sealing member 104 is interposed between the flange 13 and the housing 101. For this reason, an inner space of the housing 101 is enclosed by the sealing member 104. In addition, the bayonet 12 is pushed to the housing 101 due to an elastic force of the sealing member 104. For this reason, it is possible to prevent the lighting device for vehicle 1 from escaping from the housing 101.

The connector 105 is fitted to end portions of the plurality of power feeding terminals 31 which are exposed to the inside of the hole 10b. A power supply (not illustrated), or the like, is electrically connected to the connector 105. For this reason, the power supply (not illustrated), or the like, and the light emitting element 22 are electrically connected when the connector 105 is fitted to the end portion of the power feeding terminal 31. In addition, the connector 105 has a stepped portion. In addition, a sealing member 105a is attached to the stepped portion. The sealing member 105a is provided in order to prevent water from entering the inside of the hole 10b. When the connector 105 including the sealing member 105a is inserted into the hole 10b, the hole 10b is enclosed so as to be watertight. The sealing member 105a can be formed in an annular shape. The sealing member 105a can be formed of a material with elasticity such as rubber, a silicone resin, or the like. It is also possible to bond the connector 105 to an element on the socket 10 side using an adhesive, or the like, for example.

While certain embodiments have been described, these embodiments have been presented by way of example only, and are not intended to limit the scope of the inventions. Indeed, the novel embodiments described herein may be embodied in a variety of other forms; furthermore, various omissions, substitutions and changes in the form of the embodiments described herein may be made without departing from the spirit of the inventions. The accompanying claims and their equivalents are intended to cover such forms or modifications as would fall within the scope and spirit of the inventions. Moreover, above-mentioned embodiments can be combined mutually and can be carried out.

## Claims

1. A lighting device for vehicle (1) comprising:
a socket (10) containing a high heat conductive resin; and
a light emitting unit (20) which is provided at one end portion of the socket (10), and includes a substrate (21) which contains ceramic, and a light emitting element (22) provided on the substrate (21),
a face of the substrate (21) on a side opposite to a side on which the light emitting element (22) is provided being in contact with one end portion of the socket (10),
power applied to the light emitting element (22) being 1 W or more and 3 W or less, and
the high heat conductive resin containing polyamide, and filler containing carbon, and having heat conductivity of 15 W/(m•K) or more, and 33 W/(m•K) or less.

2. A lighting device for vehicle (1) comprising:
a socket (10) containing a high heat conductive resin; and
a light emitting unit (20) which is provided at one end portion of the socket (10), and includes a substrate (21) which contains ceramic, and a light emitting element (22) provided on the substrate (21),
wherein a face of the substrate (21) on a side opposite to a side on which the light emitting element (22) is provided being in contact with one end portion of the socket (10),
power applied to the light emitting element (22) being 4 W or more and 8 W or less, and
the high heat conductive resin containing polyamide, and filler containing carbon, and having heat conductivity of 30 W/(m•K) or more, and 53 W/(m•K) or less.

3. A lighting device for vehicle (1) comprising:
a socket (10) containing a high heat conductive resin;
a light emitting unit (20) which is provided at one end portion of the socket (10), and includes a substrate (21) which contains ceramic, and a light emitting element (22) provided on the substrate (21);
a heat radiating plate (24) provided between the substrate (21) and one end portion of the socket (10); and
a heat radiating layer (25) which is provided between the heat radiating plate (24) and the one end portion of the socket (10), and contains heat conductive grease,
wherein power applied to the light emitting element (22) being 1 W or more, and 3 W or less, and
the high heat conductive resin containing polyamide, and filler which contains carbon, and having heat conductivity of 4 W /(m•K) or more, and 33 W/(m•K) or less.

4. A lighting tool for vehicle (100) comprising:
the lighting device for vehicle (1) according to any one of claims 1 to 3; and
a housing (101) to which the lighting device for vehicle (1) is attached.
